# EUROPÄISCHE PATENTSCHRIFT

(11) **EP 0 817 737 B1**
(45) Veröffentlichungstag und Bekanntmachung des Hinweises auf die Patenterteilung: **13.09.2000**
(21) Anmeldenummer: 96910933.9
(22) Anmeldetag: 26.03.1996
(51) Int. Cl.: B60T 8/48, B60T 8/24

(54) **VERFAHREN ZUR TEMPERATURABHÄNGIGEN EINSCHALTUNG EINER DRUCKMITTEL-ZUSATZQUELLE IN SCHLUPFGEREGELTEN KRAFTFAHRZEUG-BREMSANLAGEN**
PROCESS FOR THE TEMPERATURE-DEPENDENT ACTUATION OF AN ADDITIONAL PRESSURE MEDIUM SOURCE IN SLIP-CONTROLLED MOTOR VEHICLE BRAKING SYSTEMS
PROCEDE DE CONNEXION, DEPENDANT DE LA TEMPERATURE, D'UNE SOURCE ADDITIONNELLE DE FLUIDE HYDRAULIQUE DANS DES SYSTEMES DE FREINAGE D'AUTOMOBILES A REGULATION ANTIPATINAGE

(30) Priorität: 07.04.1995 DE 19513128
(43) Veröffentlichungstag der Anmeldung: 14.01.1998
(73) Patentinhaber: Continental Teves AG & Co. oHG, 60488 Frankfurt (DE)
(72) Erfinder: SCHWARZER, Paul, D-65830 Kriftel (DE); KRULL, Thomas, D-61476 Kronberg (DE); GRÄBER, Johannes, D-65760 Eschborn (DE)
(86) Internationale Anmeldenummer: EP9601329
(87) Internationale Veröffentlichungsnummer: WO9631375

(56) Entgegenhaltungen:
- EP-A- 0 459 117
- EP-A- 0 538 600
- DE-A- 3 709 189
- DE-A- 3 910 285
- DE-A- 4 009 303
- DE-A- 4 010 410
- DE-A- 4 107 978
- DE-A- 4 128 091
- DE-A- 4 425 578
- DE-C- 4 329 140
- DE-U- 9 102 352

## Beschreibung

Die Erfindung betrifft ein Verfahren zum Betreiben einer schlupfgeregelten Kraftfahrzeug-Bremsanlage zur Fahrdynamikregelung, bei der der zu regelnde Solldruck an den Kraftfahrzeugbremsen von einer Förderpumpe zur Verfügung gestellt wird. Um die Regelungszeit, insbesondere bei hoher Viskosität des Druckmittels zu verkürzen, ist in der älteren P 44 25 578.0 (P 7697) vorgeschlagen worden, zu Beginn des Regelvorgangs eine zusätzliche Druckmittelquelle einzuschalten, welche schnell den zur Regelung benötigten Druck des Druckmittels zur Verfügung stellt. Wie in der genannten P 44 25 578.0 ausführlich beschrieben, bietet eine derartige Maßnahme den großen Vorteil, daß auch bei hoher Viskosität des Druckmittels und damit erheblicher Druckverluste aufgrund der Zähflüssigkeit des Druckmittels innerhalb der Druckleitungen das Ansprechen der Regelung an den Bremsen erheblich beschleunigt werden kann.

In der DE-C- 43 29 140 ist eine Bremsdrucksteuereinrichtung beschrieben, die bei einer Bremsassistenten-Funktion den Tandemhauptzylinder und die Förderpumpen in Abhängigkeit von der Betätigung eines Bremspedals steuern.

Als gewisser Nachteil hat sich allerdings herausgestellt, daß das Zuschalten einer derartige Zusatz-Druckmittelquelle zu Geräuschen führt, die den Betreiber gerade zu dem Zeitpunkt ablenken könnten, bei welchem er sich in einer kritischen, eine Regelung erfordernden Fahrsituation befindet.

Die Erfindung geht daher aus von einem Verfahren der sich aus dem Oberbegriff des Anspruchs 1 ergebenden Gattung sowie einer ein derartiges Verfahren anwendenden Bremsanlage. Aufgabe der Erfindung ist es, die Zusatzdruckmittelquelle nur dann dem Regelkreis zuzuschalten, wenn dies zur Beschleungigung des Regelvorgangs auch tatsächlich notwendig ist.

Die Aufgabe wird erfindungsgemäß durch die sich aus dem kennzeichnenden Teil des Anspruchs 1 ergebende Merkmalskombination gelöst. Die Erfindung besteht im Prinzip also darin, die Einschaltung der zusätzlichen Druckmittelquelle nicht nur von der hinreichenden Abweichung des zu regelnden Istwerts von dem Sollwert der fahrdynamischen Regelungsgröße abhängig zu machen, sondern zusätzlich von einem weiteren Parameter, welcher ein Maß dafür bildet, ob die Zuschaltung der Druckmittelquelle unter den Umgebungsbedingungen zur Erhöhung der Regelungsgeschwindigkeit überhaupt sinnvoll und notwendig ist. Die Erfindung bringt den zusätzlichen Vorteil, daß die zusätzliche Druckmittelquelle nicht unnötig bedient wird und damit mechanisch weniger belastet wird, was zur Erhöhung ihrer Zuverlässigkeit und Haltbarkeit beiträgt.

In der Praxis hat sich als besonders sinnvoll erwiesen, gemäß der Merkmalskombination nach Anspruch 2 die Zuschaltung der zusätzlichen Druckmittelquelle von der Zähflüssigkeit des Druckmittels abhängig zu machen. Ein die Zähflüssigkeit beeinflussender wichtiger Parameter ist die Temperatur des Druckmittels selbst, so daß es sich in vorteilhafter Weiterbildung der Erfindung empfiehlt, die Zuschaltung von der Druckmitteltemperatur abhängig zu machen.

Um zusätzliche Sensoren zur Temperaturmessung einzusparen, empfiehlt sich in Weiterbildung der Erfindung die Anwendung der Merkmalskombination nach Anspruch 4, da aufgrund der Motorregelung in einem Kraftfahrzeug ohnedies regelmäßig ein Temperatursensor im Luftansaugkanal vorhanden ist.

Eine andere Möglichkeit auf die Temperatur des Druckmittels zu schließen, besteht in der Anwendung der Merkmalskombination nach Anspruch 5. Danach wird im Prinzip das Regelverhalten der Regelung zur Abschätzung der Temperatur ausgewertet.

Eine besonders einfache Regel zur Einschaltung der zusätzlichen Druckmittelquelle ergibt sich durch die Merkmalskombination nach Anspruch 6, insbesondere unter Verwendung der Merkmale nach Anspruch 7.

Für die Erfindung stellt es eine besonders vorteilhafte Weiterbildung dar, wenn die Zuschaltung der Druckmittel-Zusatzquelle von einem zusätzlichen Parameter abhängig gemacht wird, welcher dem Gradienten der Istwert-Abweichung von dem Sollwert der Regelgröße entspricht. Anders ausgedrückt: weicht der Istwert der zu regelnden fahrdynamischen Größe, wie beispielsweise der Gierwinkelgeschwindigkeit, nur sehr langsam von dem gewünschten Sollwert ab, so ist es nicht notwendig, daß die Regelung aufgrund der Zuschaltung der Druckmittel-Zusatzquelle sehr plötzlich eingreift. Vielmehr reicht es dann aus, daß die Regelung nur mit Hilfe der Förderpumpe als Druckmittelquelle betrieben wird. Der Vorteil ist, daß hierdurch die Regelung nicht nur vergleichsweise leise arbeitet, sondern auch sanfter das Fahrverhalten des Fahrzeugs korrigiert. Dies trägt zusätzlich zur Erhöhung des Fahrkomforts der Bedienungsperson bei. Dabei empfiehlt es sich in Weiterbildung der Erfindung besonders, die Einschaltung der Zusatzquelle von dem Wert des Gradienten der Differenz (einer) folgender Größen abhängig zu machen: demLenkwinkel, Gierwinkel oder der Gierwinkelgeschindigkeit des Fahrzeugs. Die Erfindung ist mit Vorteil aber auch anwendbar, wenn statt dessen der Gradient der Differenz der Querbeschleunigungen des Fahrzeugs oder der Geschwindigkeitkeiten des Fahrzeugs als Einschaltkriterium für die Druckmittel-Zusatzquelle dient.

Eine weitere Verbesserung der Erfindung kann darin bestehen, den zusätzlichen Parameter, von dem die Zuschaltung der Zusatzquelle abhängt, nicht oder nicht nur von dem Gradienten der zu regelnden fahrtechnischen Größe, sondern (auch zusätzlich noch) von der Temperatur abhängig zu machen. Dies kann die Umgebungstemperatur des Fahrzeugs, aber auch die Temperatur des Druckmittels sein. Hierdurch ist es beispielsweise möglich, die Zusatzquelle dann zur Beschleunigung der Regelung einzuschalten, wenn entweder der Gradient der Abweichung der zu regelnden Größe einen bestimmten Wert erreicht hat oder die Temperatur unterhalb eines bestimmten Wertes liegt. Selbstverständlich kann auch hier eine Mischgröße gebildet werden, die von beiden Werten abhängt, so daß für die Zuschaltung der Zusatzquelle die Gradienten um so kleiner sein können, je tiefer die Umgebungstemperatur liegt.
Die Anwendung des erfindungsgemäßen Verfahrens ist insbesondere zweckmäßig bei einer Bremsanlage mit den Merkmalen nach Anspruch 8, um die mechanische Belastung der dort genannten Druckmittelquellen möglichst herabzusetzen.

Sehr bewährt hat sich die Erfindung bei einer zusätzlichen Druckmittelquelle gemäß den Merkmalen nach Anspruch 9, da aufgrund der Vermeidung der Schaltgeräusche der dort beschriebenen Quelle der Fahrkomfort während des Regelungsfalles des Fahrzeugs erheblich heraufgesetzt wird.

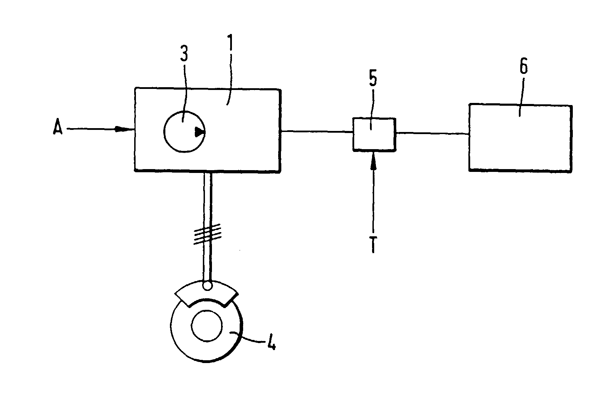

Ein Ausführungsbeispiel der Erfindung wird nachfolgend kurz anhand der Zeichnung erläutert.

Die Zeichnung zeigt einen Regelkreis 1, welcher zum Herbeiführen des notwendigen Regeldrucks mit einer Förderpumpe 3 versehen ist. Sobald die Abweichung A des gemessenen Istwertes der Regelungsgröße von dem Sollwert eine hinreichende Größe erreicht, läuft die Förderpumpe an und stellt über nicht dargestellte Ventile entsprechend gesteuert, den einzelnen Radbremsen 4 einen individuellen Bremsdruck zur Verfügung, welcher geeignet ist, den Istwert der Regelungsgröße zu dem vorgegebenen Sollwert zurückzuführen.

In der Zeichnung ist weiterhin noch ein Schalter 5 dargestellt, welcher in Abhängigkeit der ermittelten Temperatur des Druckmittels eine Zusatzquelle 6 in den Regelungskreis 1 einschaltet, so daß der für die Regelung notwendige Druck schneller zur Verfügung gestellt und damit die Regelgeschwindigkeit erhöht wird.

Einzelheiten zur Arbeitsweise des Regelkreises und der Förderpumpe in Verbindung mit den Radbremsen und der Zusatzquelle sind prinzipiell in der oben genannten P 44 25 578.0 erläutert und sollen an dieser Stelle daher nicht wiederholt werden.

## Patentansprüche

1. Verfahren zum Betreiben einer schlupfgeregelten Kraft fahrzeug-Bremsanlage mit Fahrdynamikregelung (1), insbe sondere zur Fahrstabilitätsregelung und/oder Antriebsschlupfregelung, die neben einer im Regelungsfall der Bremsdruckregelung dienenden Förderpumpe (3) eine Druckmittel-Zusatzquelle aufweist, welche zeitlich vor oder parallel zur Förderpumpe (3) unter Druck stehendes Druckmittel abgibt, welches zur Bremsdruckregelung an den Fahrzeugbremsen (4) dient, dadurch **gekennzeichnet**, daß die Druckmittel-Zusatzquelle (6), während dem Regelungsfall sowohl in Abhängigkeit von der Größe der Abweichung (A) des Istwertes der Regelgröße vom Sollwert, als auch in Ahängigkeit von der Größe eines zusätzlichen Parameters (T) eingeschaltet wird.

2. Verfahren nach Anspruch 1, dadurch **gekennzeichnet**, daß der von der Regelgröße abhängige Parameter von der Viskosität des Druckmittels in dem Regelkreis abhängt.

3. Verfahren nach Anspruch 1 oder 2, dadurch **gekennzeichnet,** daß der abhängige Parameter der Temperatur des Druckmittels in dem Bremssystem entspricht.

4. Verfahren nach Anspruch 3, dadurch **gekennzeichnet**, daß zur Bestimmung des Parameters die Luftansaugtemperatur des Kraftfahrzeugs gemessen wird.

5. Verfahren nach Anspruch 3, dadurch **gekennzeichnet**, daß zur Festlegung des Parameters der aus den Rad- und Fahrzeugreaktionen vor dem Regeleingriff ermittelte Druck an der Radbremse mit dem aus einem Regelungsmodell für den Druck an der Radbremse abgeschätzten Raddruck verglichen und aufgrund der festgestellten Abweichung die Temperatur geschätzt wird.

6. Verfahren nach einem der Ansprüche 2 bis 5, dadurch **gekennzeichnet,** daß die zusätzliche Druckmittelquelle nur eingeschaltet werden kann, wenn die Temperatur des Druckmittels einen bestimmten Wert unterschreitet.

7. Verfahren nach einem der Ansprüche 1 bis 6, dadurch **gekennzeichnet,** daß die Druckmittel-Zusatzquelle (6) für die Regelung erst eingeschaltet wird, wenn die Druckmitteltemperatur einen Wert unterhalb 0° C hat.

8. Verfahren nach Anspruch 1, dadurch **gekennzeichnet**, daß der zusätzliche Parameter von dem Gradienten der Istwert-Abweichung der Regelgröße vom Sollwert abhängt.

9. Verfahren nach Anspruch 8, dadurch **gekennzeichnet**, daß der zusätzlich Parameter dem Gradienten derGierwinkelgeschwindigskeitsabweichung bzw. der Querbeschleunigungsabweichung bzw. der Lenkwinkelabweichung bzw. der Geschwindigkeitsabweichung entspricht.

10. Verfahren nach Anspruch 2 oder 3 und Anspruch 8, dadurch **gekennzeichnet**, daß der zusätzliche Parameter sowohl vom Gradienten der Istwertabweichung der Regelgröße, als auch der Umgebungstemperatur, insbesondere der Temperatur des Druckmittels abhängt.

## Claims

1. Process for operating a slip-controlled automotive vehicle brake system with driving dynamics control (1), in particular for driving stability control and/or traction slip control, which in addition to a supply pump (3) serving braking pressure control in a control operation, includes a supplemental pressure fluid source that, temporally before or in parallel with the supply pump (3), emits pressurized fluid which is used for braking pressure control on the vehicle brakes (4),
**characterized** in that the supplemental pressure fluid source (6) is turned on during a control operation both as a function of the magnitude of the deviation (A) of the actual value of the control quantity from the nominal value and as a function of the magnitude of an additional parameter (T).

2. Process as claimed in claim 1,
**characterized** in that the parameter dependent on the control quantity depends on the viscosity of the pressure fluid in the control circuit.

3. Process as claimed in claim 1 or 2,
**characterized** in that the dependent parameter corresponds to the temperature of the pressure fluid in the brake system.

4. Process as claimed in claim 3,
**characterized** in that the air intake temperature of the automotive vehicle is measured in order to determine the parameter.

5. Process as claimed in claim 3,
**characterized** in that, in order to determine the parameter, the pressure on the wheel brake detected from the wheel and vehicle reactions before the control intervention is compared to the wheel pressure estimated from the control model for the pressure on the wheel brake, and the temperature is estimated based on the ascertained deviation.

6. Process as claimed in any one of claims 2 to 5,
**characterized** in that the supplemental pressure fluid source can be turned on only if the temperature of the pressure fluid falls below a specified value.

7. Process as claimed in any one of claims 1 to 6,
**characterized** in that the supplemental pressure fluid source (6) is turned on for the control only if the temperature of the pressure fluid adopts a value below 0°C.

8. Process as claimed in claim 1,
**characterized** in that the additional parameter depends on the gradient of the deviation of the actual value of the control quantity from the nominal value.

9. Process as claimed in claim 8,
**characterized** in that the additional parameter corresponds to the gradient of the deviation of the yaw angle velocity or the deviation of the transverse acceleration or the deviation of the steering angle or the deviation of the velocity.

10. Process as claimed in claim 2 or 3 and claim 8,
**characterized** in that the additional parameter depends both on the gradient of the deviation of the actual value of the control quantity and on the environmental temperature, especially the temperature of the pressure fluid.

## Revendications

1. Procédé d'exploitation d'un système de freinage pour véhicule automobile à régulation antipatinage comportant une régulation de dynamique du mouvement du véhicule (1), notamment pour la régulation de stabilité du mouvement et/ou pour la régulation antipatinage d'entraînement, cette régulation comportant, en plus d'une pompe de refoulement (3) servant à la régulation de pression de freinage en situation de régulation, une source supplémentaire d'agent de pression qui délivre avant la pompe de refoulement (3) ou parallèlement à la pompe de refoulement (3) dans le temps, un agent de pression sous pression qui sert à la régulation de pression de freinage des freins de véhicule (4), caractérisé en ce que pendant la situation de régulation, la source supplémentaire d'agent de pression (6) est mise en service aussi bien en fonction de la grandeur de la différence (A) entre la valeur réelle de la grandeur réglée et la valeur de consigne, qu'en fonction de la grandeur d'un paramètre supplémentaire (T).

2. Procédé selon la revendication 1, caractérisé en ce que le paramètre qui dépend de la grandeur réglée dépend de la viscosité de l'agent de pression disposé dans le circuit de régulation.

3. Procédé selon la revendication 1 ou la revendication 2, caractérisé en ce que le paramètre dépendant correspond à la température de l'agent de pression disposé dans le système de freinage.

4. Procédé selon la revendication 3, caractérisé en ce que la température de l'air aspiré du véhicule automobile est mesurée pour la détermination du paramètre.

5. Procédé selon la revendication 3, caractérisé en ce que, pour la détermination du paramètre, la pression au frein de roue déterminée par les réactions de roue et de véhicule avant le déclenchement de la régulation est comparée à une pression de roue estimée à partir d'un modèle de régulation pour la pression présente sur le frein de roue, et la température est estimée sur la base de la différence déterminée.

6. Procédé selon l'une quelconque des revendications 2 à 5, caractérisé en ce que la source supplémentaire d'agent de pression ne peut être mise en service que lorsque la température de l'agent de pression franchit vers le bas une valeur déterminée.

7. Procédé selon l'une quelconque des revendications 1 à 6, caractérisé en ce que la source supplémentaire d'agent de pression (6) pour la régulation n'est mise en service que lorsque la température de l'agent de pression présente une valeur au-dessous de 0°C.

8. Procédé selon la revendication 1, caractérisé en ce que le paramètre supplémentaire dépend du gradient de la différence entre la valeur réelle de la grandeur réglée et la valeur de consigne.

9. Procédé selon la revendication 8, caractérisé en ce que le paramètre supplémentaire correspond au gradient de la différence de vitesse d'angle de lacet, de la différence d'accélération transversale, de la différence de l'angle de direction ou de la différence de vitesse.

10. Procédé selon la revendication 2 ou la revendication 3 et la revendication 8, caractérisé en ce que le paramètre supplémentaire dépend aussi bien du gradient de la différence de la valeur réelle de la grandeur réglée que de la température ambiante, notamment de la température de l'agent de pression.
